**Europäisches Patentamt**

**European Patent Office**

**Office européen des brevets**

(19)

(11) Publication number : **0 573 513 B1**

(12) **EUROPEAN PATENT SPECIFICATION**

(45) Date of publication of patent specification :
04.10.95 Bulletin 95/40

(51) Int. Cl.⁶ : **G01S 13/78**

(21) Application number : **92905712.3**

(22) Date of filing : **21.01.92**

(86) International application number :
**PCT/US92/00512**

(87) International publication number :
**WO 92/15025 03.09.92 Gazette 92/23**

(54) **Digital video quantizer.**

(30) Priority : **25.02.91 US 660499**

(43) Date of publication of application :
**15.12.93 Bulletin 93/50**

(45) Publication of the grant of the patent :
**04.10.95 Bulletin 95/40**

(84) Designated Contracting States :
**DE FR GB IT**

(56) References cited :
**EP-A- 0 300 046**
**NL-A- 8 003 198**
**US-A- 4 729 014**
**US-A- 4 899 157**
**INTERNATIONAL CONFERENCE RADAR**
**87,19 October 1987, London, UK;pages 237 -**
**241; A.J.MCDEVITT et al.:"Operation of mono-**
**pulse SSR at difficult sites"**

(73) Proprietor : **AlliedSignal Inc.**
**101 Columbia Road,**
**P.O. Box 2245**
**Morristown, New Jersey 07962-2245 (US)**

(72) Inventor : **JONES, James, B.**
**2151 N.E. 44th Court**
**Lighthouse Point, FL 33064 (US)**
Inventor : **MANDUJANO, Celeo, R.**
**20581 Mendocino Lane**
**Boca Raton, FL 33428 (US)**
Inventor : **VENKATARAMAN, Vasan**
**816 SE 11th Court**
**Fort Lauderdale, FL 33316 (US)**
Inventor : **KYRIAKOS, Constantinos, S.**
**4770 Fox Hunt Trail**
**Boca Raton, FL 33428 (US)**

(74) Representative : **Poidatz, Emmanuel**
**Conseil en Brevets d'Invention**
**96, Boulevard Malesherbes**
**F-75017 Paris (FR)**

# Description

## Background of the Invention

### Field of the Invention:

The present invention relates generally to decoding Pulse Code Modulation (PCM) signals used in air traffic control radar beacon systems/selective identification feature (ATCRBS/SIF) and in airborne traffic alert and collision avoidance systems (TCAS). More specifically, this invention relates to a digital video quantizer which is used to process a PCM signal before it is decoded.

### Description of the Related Art:

The ATCRBS/SIF system comprises a ground based interrogator which transmits a query to an airborne transponder. In a TCAS system, both the interrogator and transponder are airborne and provide a means for communication between aircraft. The transponder responds to the query by transmitting a reply which is received and processed by the interrogator. The interrogator includes a receiver, an analog to digital converter (A/D), a video quantizer, a leading edge detector, and a decoder.

The reply received by the interrogator consists of a series of information pulses which may identify the aircraft, or contain altitude or other information. The reply is a PCM signal which is transmitted in either a ATCRBS format or in a Mode S format.

The ATCRBS format comprises a first and a second framing pulse with 13 information pulses positioned between them. Information is conveyed by either the presence or absence of an information pulse. The pulses have a nominal width of 0.45 microseconds, and have a spacing of 1.45 microseconds between leading edges. The leading edges of the first and second framing pulses are 20.3 microseconds apart. In some cases the second framing pulse is followed by a special position identification (SPI) pulse beginning 4.35 microseconds after the leading edge of the second framing pulse.

The Mode S format comprises a 6 microsecond preamble and a data block which is either 50 or 112 microseconds long. The preamble consists of four 0.5 microsecond pulses. The leading edges of the first and second pulses are 1 microsecond apart. The third pulse begins 3.5 microseconds after the leading edge of the first pulse, and the fourth pulse begins 4.5 microseconds after the leading edge of the first pulse. The data block begins 6 microseconds after the leading edge of the first pulse of the preamble. The data block is divided into 1 microsecond wide bit positions where each bit position contains 2 consecutive 0.5 microsecond pulse positions or chips. If a pulse is located in the first position it is considered to be set, and if it is located in the second position it is considered to be cleared.

Video quantizers used in the past were analog units which used operational amplifiers, and sample and hold devices. The operational amplifiers were used to add, subtract and compare signals, and the sample and holds were used to generate dynamic thresholds.

Analog video quantizers have several drawbacks. Using operational amplifiers to compare signals against a threshold requires the use of analog voltages to represent a threshold. Analog reference voltages require manual adjustment, and their values drift with time and temperature. In addition, thresholds based on the output of a sample and hold device have variations resulting from the decay of the sample and hold's output.

In particular US-A-4.899.157 discloses an analog video quantizer apparatus for quantizing and analyzing an analog video signal which includes comparator means for comparing the analog video signal to an analog voltage threshold to produce a quantized video signal and slope detection means for detecting a slope of the analog video signal which exceeds a predetermined slope threshold.

## Summary of the Invention

The present invention, defined in the appended claim 1, includes an apparatus for quantizing and analizing a digitized video signal comprising a plurality of delay means including serially connected registers for delaying the digitized video signal to produce a plurality of delayed digitized signals, a first comparative means for comparing a delayed digitized signal to a threshold to produce a quantized video signal, means for detecting when the slope of the digitized video signal exceeds a predetermined threshold and rise time detection means for detecting a rise of the digitized video signal which exceeds a predetermined time value.

The present invention's use of digital electronics eliminates the shortcomings of the aforementioned analog video quantizer. The use of digital electronics eliminates the need for analog reference voltages. The reference voltages are now represented as binary mumbers which can easily be programmed or modified without time consuming manual adjustments. In addition, the digital references do not vary with time and temperature. The present invention also eliminates the use of a sample and hold in the video quantizer. Samples of the input signal are stored in digital form in registers, and therefore do not suffer from the output decay that is experienced with a sample and hold. The present invention also permits to detect a rise of the digitized video signal which exceeds a predetermined rise time value. Upon detection of an excessive rise time, the selection of a dynamic threshold used for producing the quantized video signal is disabled and shifted to the use of a predetermined threshold.

Other features and advantages of the present invention will appear from the following description of a preferred embodiment of the digital video quantizer according to the invention.

Brief Description of the Drawings

Figure 1 is a simplified block diagram of the reply processing portion of an interrogator, and includes a detailed block diagram of the digital video quantizer.

Figure 2 is a logic diagram of the digital delay line and the slope quantizer.

Figure 3 is a block diagram of the video threshold generator and the quantized video generator.

Figure 4 is a logic diagram of the rise time detector, the chip amplitude comparator, and the timing and control circuitry.

Description of the Preferred Embodiment

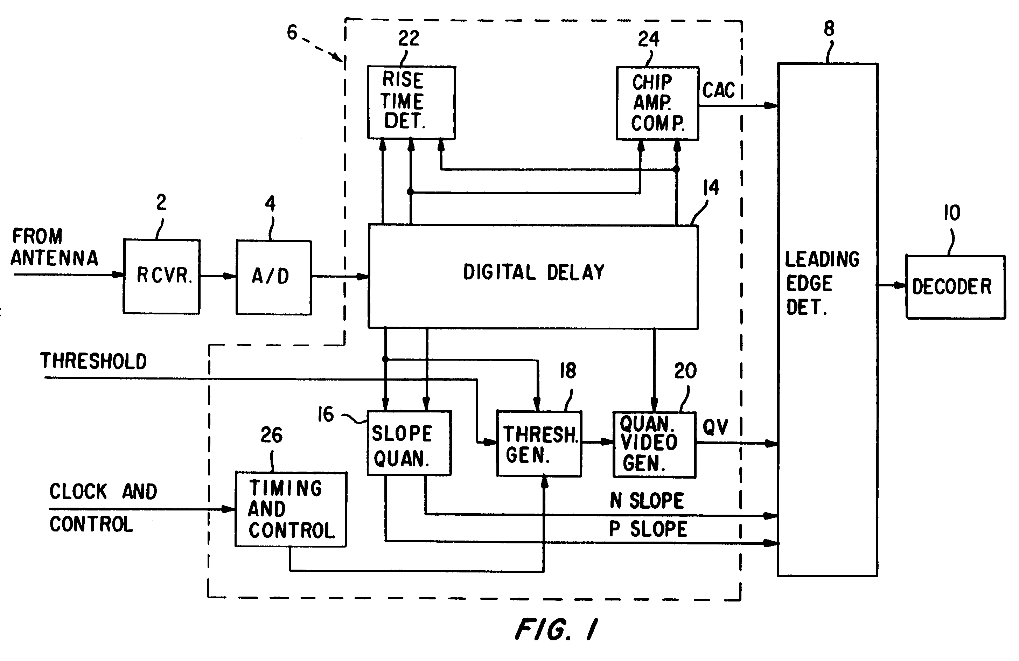

A digital video quantizer is one component of the reply processor for a TCAS or a ATCRBS/SIF system. Figure 1 is a simplified block diagram of a reply processor.

The reply processor comprises receiver 2, analog to digital converter (A/D) 4, digital video quantizer 6, leading edge detector 8, and decoder 10. Receiver 2 converts the reply from a transponder into an analog video signal. A/D 4 converts the analog video signal into a digitized video signal. Video quantizer 6 quantizes and analyzes the digitized video signal to produce four outputs which are received by leading edge detector 8. Leading edge detector 8 uses these outputs to determine the location of the leading edges of the pulses in the transponder's reply. The leading edge detector produces an output consisting of pulses which correspond to the leading edges of the reply pulses. In addition, leading edge detector 8 passes signals CAC and QV to decoder 10. The decoder then interprets the outputs from the leading edge detector to extract a message.

The leading edge detector uses algorithms to insert or remove leading edges, and thereby minimizes the effects of FRUIT, garble and phantom replies. A detailed explanation of FRUIT, garble, and phantom replies can be found in "Leading Edge Detector/Reply Quantizer", U.S. Patent 4,899,157 which issued on February 6, 1990, the contents of which are hereby incorporated by reference.

In the preferred embodiment, the digital quantizer and the leading edge detector are located in the same hybrid circuit.

Digital video quantizer 6 comprises digital delay 14, slope quantizer 16, threshold generator 18, quantized video generator 20, rise time detector 22, chip amplitude comparator 24, and timing and control circuitry 26.

Digital delay 14 receives the digitized video signal from A/D 4. The digital word can be of any width, but it is preferable to use an 8 bit wide word. Digital delay 14 delays the 8 bit wide digitized video signal in increments of one clock period.

Slope quantizer 16 measures the slope of the digitized video signal, and compares it against a positive and a negative slope threshold. If the measured slope exceeds the negative slope threshhold, such an occurrence is indicated to leading edge detector 8 via signal NSLOPE. If the measured slope exceeds the positive slope threshold, such an occurrence is indicated to leading edge detector 8 via signal PSLOPE.

Threshold generator 18 produces a threshold which is used to generate quantized video. The threshold generator produces a preprogrammed video threshold or a dynamic video threshold.

Quantized video generator 20 receives the threshold produced by threshold generator 18, and produces quantized video. Leading edge detector 8 receives the quantized video via signal QV.

Rise time detector 22 monitors the rise time of the digitized video signal. If the rise time exceeds a predetermined amount, the dynamic video threshold of threshold generator 18 is disabled.

Chip amplitude comparator 24 is used during Mode S operations. The chip amplitude comparator compares the signal amplitude in the first chip of a data bit position, with the signal amplitude in the second chip of the data bit position. The results of this comparison are communicated to leading edge detector 8 via signal CAC.

Timing and control circuitry 26 receives the clock and several other control signals from the TCAS or ATCRBS/SIF system. The timing and control circuitry buffers the clock, and resets the dynamic video threshold generator.

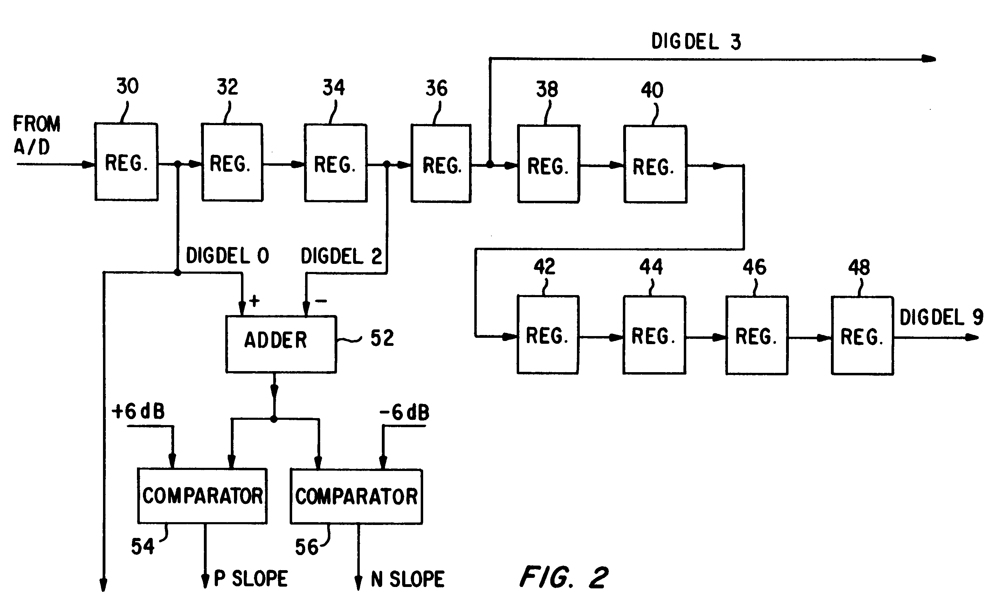

Figure 2 illustrates the logic diagram of digital delay 14. The digital delay receives the 8 bit wide words which compose the digitized video signal. The digitized video signal words are delayed in steps of one clock period. An output is available from the digital delay at each of the one step increments.

Digital delay 14 comprises a plurality of 8 bit registers which are connected in series. In the preferred embodiment, ten registers are used. The register outputs are fed to the inputs of the next register in line so that the data is shifted one register for each clock period. Delay register 30 receives its input from A/D 4, and has its output connected to the input of delay register 32. The output of delay register 32 is connected to the input of delay register 34, and delay register 34 has its output connected to the input of delay register 36. The output of delay register 36 is connected to the input of delay register 38, and delay register 38 has its output connected to the input of delay register 40. The output of delay register 40 is connected to the input of delay register 42, and the output of delay register 42 is connected to the input of delay register 44. The output of delay register 44 is connected to the input of delay register 46, and the output of delay register 46 is connected to the input of delay register 48.

The output of each 8 bit register can be made available to each of the other portions of the digital video quantizer. In the preferred embodiment, the output of delay register 30 is used by a slope quantizer 16, threshold generator 18, rise time detector 22, and chip amplitude comparator 24. The output of delay register 34 is connected to slope quantizer 16, and the output of delay register 36 is connected to quantized video generator 20 and rise time detector 22. The output of delay register 48 is connected to rise time detector 22 and chip amplitude comparator 24.

It is also possible to construct a digital delay using a plurality of shift registers, a random access memory, or flip-flops.

Slope quantizer 16 measures the slope of the digitized video signal using data from two different points on digital delay 14. The measured slope is compared against a negative and a positive slope threshold to create output signals which indicate a slope of the digitized video signal to leading edge detector 8.

The slope quantizer comprises adder 52, and comparators 54 and 56. Adder 52 is used to take the difference between data from two different points on digital delay 14. Signal DIGDEL2, which is produced by delay register 34, is subtracted from signal DIGDEL0, which is produced by delay register 30. The resulting difference is produced by adder 52, and is then connected to comparators 54 and 56. Comparator 54 compares the difference with a binary number which has an equivalent value of + 6 dB. If the difference exceeds + 6 dB, comparator 54 produces signal PSLOPE. Signal PSLOPE is connected to leading edge detector 8, and indicates that the digitized video signal has a positive slope which exceeds + 6 dB per two clock periods. Likewise, comparator 56 compares the difference from adder 52 with a binary number that has an equivalent value of - 6 dB. When the difference is less then - 6 dB, comparator 56 outputs signal NSLOPE to leading edge detector 8, and thereby indicates that the digitized video signal has a slope more negative than - 6 dB per two clock periods.

The + 6 dB and - 6 dB references, which are used by comparators 54 and 56 respectively, can be stored, for example, in a register, a RAM, a PROM, or dip switches. Modification of the references is facilitated through the use of these devices.

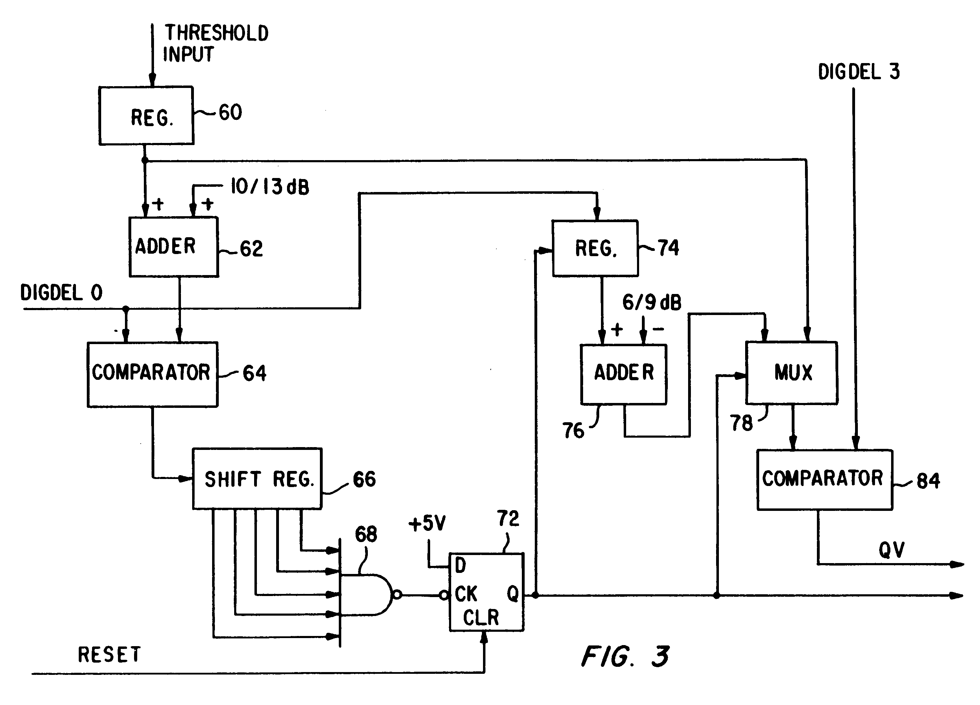

Figure 3 contains a logic diagram of threshold generator 18. The threshold generator provides a threshold which is compared to the digitized video signal to produce a quantized video signal. The threshold generator provides either a preprogrammed video threshold or a dynamic video threshold. The dynamic threshold is based on a sample of the digitized video signal.

Threshold generator 18 comprises a register for storing the preprogrammed video threshold, dynamic holdoff and narrow pulse detection logic, dynamic threshold generation logic, and threshold select logic.

Register 60 stores the preprogrammed video threshold. This threshold is loaded into the register by the interrogator system's control microprocessor. It should be noted that register 60 can be replaced, for example, with a PROM, a RAM or dip switches.

The dynamic holdoff and narrow pulse detection logic prevents creating a dynamic video threshold which is based on a digitized video signal pulse that is below a holdoff threshold, or that has a width which is less than five clock periods. This logic is comprised of adder 62, comparator 64, shift register 66 and NAND gate 68. The preprogrammed video threshold stored in register 60 is connected to an input of adder 62. Adder 62 adds a binary number to the preprogrammed video threshold to produce a dynamic holdoff threshold. The number added to the preprogrammed video threshold is a binary number corresponding to 13 or 10 dB. 13 dB is used for ATCRBS mode and 10 dB is used for Mode S. These values can be provided to adder 62 by using, for example, a register, a RAM, a PROM or dip switches.

The dynamic holdoff threshold from adder 62 is connected to comparator 64. Comparator 64 compares the dynamic holdoff threshold with signal DIGDEL0 from delay register 30. When DIGDEL0 is greater than the dynamic holdoff threshold, comparator 64 sends a logic 1 to shift register 66. Five bit shift register 66 then shifts the signal from comparator 64 one position for each clock pulse. Five consecutive parallel outputs from shift register 66 are connected to five inputs of NAND gate 68. NAND gate 68 produces a logic 0 signal when signal DIGDEL0 has exceeded the dynamic holdoff threshold for five consecutive clock pulses.

The dynamic video threshold generation logic comprises D flip-flop 72, register 74 and adder 76. D flip-flop 72 receives the output from NAND gate 68 as a clock input. When D flip-flop 72 is clocked, the logic 1 level at the D input is transferred to the Q output of the flip-flop. The Q output of D flip-flop 72 is connected to the clock input of register 74. Register 74 samples signal DIGDEL0 when it receives a logic level 1 from the Q output of D flip-flop 72. The dynamic video threshold is generated from this latched or sampled value of the digitized video signal. The output of register 74 is connected to a first input of adder 76. Adder 76 is used to subtract 6 dB or 9 dB from the sampled value of the digitized video signal. The 6 dB or 9 dB value is provided to a second input of adder 76 as a binary number. These values can be stored, for example, in a register, a RAM, a PROM or dip switches. The 6 dB value is used in Mode S operations, and the 9 dB value is used in ATCRBS operations. The output of adder 76 is the dynamic video threshold.

An advantage of using a dynamic video threshold is that weak replies, which may result from distant or multipath returns, are ignored in favor of stronger replies.

The remaining portion of threshold generator 18 is the threshold select logic. This section provides quantized video generator 20 with a video threshold. It selects between the dynamic video threshold and the preprogrammed video threshold. The threshold select logic is comprised of 2 to 1 multiplexer 78 which has a select line controlled by the Q output of D flip-flop 72. Multiplexer 78 receives the dynamic video threshold on a first input from adder 76, and the preprogrammed video threshold on a second input from register 60. When the Q output of D flip-flop 72 has a value of logic 1, multiplexer 78 provides the quantized video generator with the dynamic video threshold. When the Q output of D flip-flop 72 has a value of logic 0, multiplexer 78 outputs the preprogrammed video threshold.

Once the dynamic video threshold is selected, it remains active until the clear input of D flip-flop 72 is activated. Activating the clear input lowers the Q output of D flip-flop 72 to logic 0, and thereby deselects the dynamic video threshold.

Quantized video generator 20 comprises comparator 84. The quantized video generator compares the digitized video signal with a video threshold to create quantized video which is connected to leading edge detector 8 via signal QV. Comparator 84 receives the video threshold from multiplexor 78 on a first input, and receives signal DIGDEL3 from delay register 36 on a second input. Whenever signal DIGDEL3 is greater than the video threshold, comparator 84 provides a logic 0 on signal QV to indicate that the digitized video signal has exceeded the video threshold.

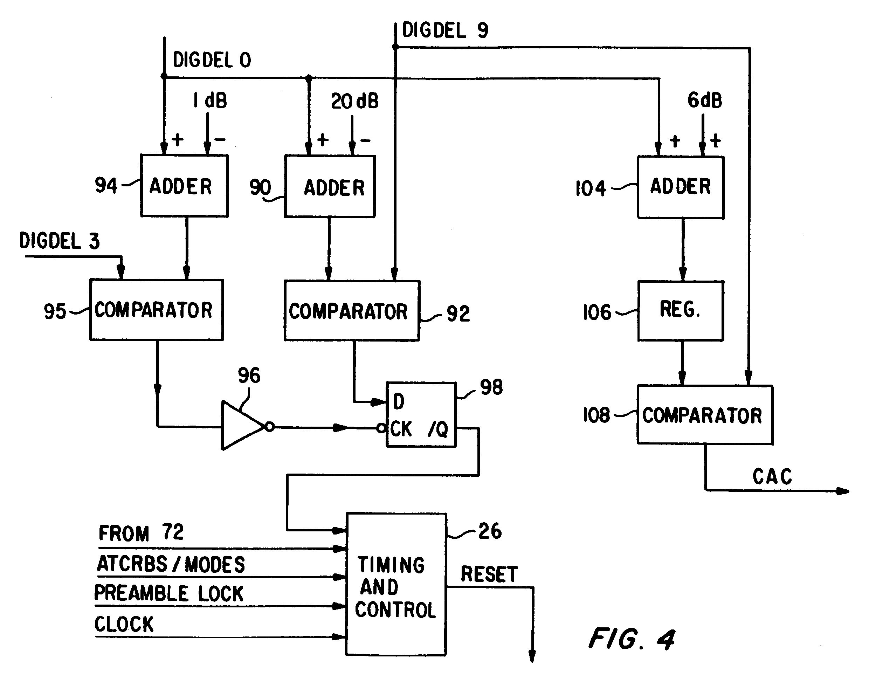

Figure 4 contains a logic diagram of rise time detector 22. The rise time detector detects a digitized video signal pulse with an excessive rise time. The detector uses samples of the digitized video signal which are separated by 9 clock periods. Other separations can be used, but it is preferable to use 9 clock periods. An excessive rise time is declared if, a sample delayed by 10 clock periods is less than 20 dB down from a sample delayed by 1 clock period, while a sample delayed by 4 clock periods is within 1 dB of the sample delayed by 1 clock period.

The rise time detector comprises a 20 dB detection circuit, a 1 dB detection circuit and a D flip-flop. The 20 dB detection circuit creates a 20 dB threshold by subtracting 20 dB from a sample of the digitized video signal. The 20 dB detection circuitry is comprised of adder 90 and comparator 92. Adder 90 receives signal DIGDEL0 from delay register 30 on a first input, and receives a binary number equivalent to 20 dB on a second input. Adder 90 subtracts the binary number from signal DIGDEL0. The binary number representing 20 dB can be stored, for example, in a register, a RAM a PROM or dip switches. The output of adder 90 is a 20 dB threshold which is compared with signal DIGDEL9 from delay register 48. Comparator 92 compares the 20 dB threshold and signal DIGDEL9, and provides an output of logic level 0 when the 20 dB threshold is exceeded by signal DIGDEL9.

The 1 dB detection circuit creates a threshold by subtracting 1 dB from signal DIGDEL0. The 1 dB threshold is then compared with signal DIGDEL3 from delay register 36. Adder 94 is used to subtract a binary number equivalent to 1 dB from signal DIGDEL0. The binary number representing 1 dB can be stored, for example, in a register, a PROM, a RAM or dip switches. The output of adder 94 is the 1 dB threshold. Comparator 95 compares the 1 dB threshold with signal DIGDEL3. The output of comparator 95 will transition from a low to a high when signal DIGDEL3 exceeds the 1 dB threshold. The output of comparator 95 is inverted by inverter 96, and the output of inverter 96 is connected to the clock input of D flip-flop 98.

D flip-flop 98 is used to latch the occurrence of an excessively long rise time. D flip-flop 98 receives the output of comparator 92 on its D input, and receives the output of inverter 96 on its clock input. If the signal from comparator 92 is still at logic 0, when the clock input is activated by the output of inverter 96, a logic 1 will appear at the /Q output of the D flip-flop. When the /Q output assumes a value of logic 1, it indicates an excessive rise time to timing and control circuitry 26.

Chip amplitude comparator 24 compares two samples of the digitized video signal which are separated by approximately 0.5 microseconds. If the earlier sample exceeds the later sample by more than 6 dB, a chip amplitude compare (CAC) signal is activated. During Mode S operations, leading edge detector 8 passes signal CAC to detector 10 so that the value of the Mode S data bits can be determined.

Chip amplitude comparator 24 comprises adder 104, register 106 and comparator 108. Adder 104 receives signal DIGDEL0 from delay register 30 on a first input, and receives a binary number equivalent to a value of 6 dB on a second input. The binary number representing 6 dB can be stored, for example, in a register, a RAM, a PROM or dip switches. Adder 104 sums its inputs to produce a chip amplitude compare threshold which is received by register 106. The threshold from register 106 is compared in comparator 108 with signal DIGDEL9 from delay register 48. When DIGDEL9 exceeds the threshold from register 106, comparator 108 produces an output of logic 0. An output of logic 0 indicates that the earlier sample of the digitized video signal exceeds the later sample by more than 6 dB. This information is then conveyed to leading edge detector 8 via signal CAC.

Timing and control circuitry 26 receives and buffers the input clock, and selects the preprogrammed video threshold by resetting threshold generator 18. The clock signal received and buffered by timing and control circuitry 26 is 16.000 MHz for ATCRBS, and is 16.552 MHz for Mode S.

The reset from timing and control circuitry 26 resets threshold generator 18 by clearing D flip-flop 72. Clearing D flip-flop 72 selects the preprogrammed video threshold via multiplexer 78. This reset occurs under several circumstances. When rise time detector 22 detects an excessive rise time, the threshold generator is reset. In addition, the output of D flip-flop 72 starts a programmable timer contained in timing and control circuitry 26. After a predetermined amount of time, this timer causes the threshold generator to be reset. In ATCRBS mode, the reset occurs 26 microseconds after the dynamic video threshold is selected, and in Mode S the reset occurs 6 microseconds after the dynamic video threshold is selected. In the case of Mode S, if a preamble lock is detected in the input signal, the 6 microsecond timeout is disabled and the reset will not occur until the preamble lock is removed. The timing and control circuitry is made aware of a preamble lock by a signal which is received from decoder 10. The timing and control circuitry also receives an input from the interrogator system's control microprocessor which indicates whether the digital video quantizer is operating in ATCRBS mode or Mode S.

The programmable timer contained in timing and control circuit 26 can be constructed in a variety of ways. One technique is to use a counter which can be preset to two different values. The first value will cause the counter to overflow and create a carry out signal after 26 microseconds, and the second value will cause the counter to overflow and create a carry out signal after 6 microseconds. This carry out signal can be used to help generate the reset signal for threshold generator 18. The other conditions which cause a reset can be accomodated for by using logic gates which are well known in the art.

At several points in the digital video quantizer an adder is used to take the difference between values. This can be accomplished by taking the two's complement of the subtrahend. Taking the two's complement can be accomplished by inverting the bits that make up the subtrahend while placing a logic level 1 at the carry-in input of the adder of interest.

The reference values given in dBs are converted to a binary number by the following formula:

$$\text{Binary Value} = 60\text{mV/dB} \times 256/5000\text{mV} \times \text{Value in dBs}$$

This formula is arrived at by noting that receiver 2 is a log receiver with an output of 60mV/dB, and that A/D 4 produces an 8 bit word with a 5 volt dynamic range.

In the most preferred embodiment, the binary reference values and the preprogrammed threshold, are stored in registers which are loaded by the interrogator system's control microprocessor.

The power, ground, and dock connections have not been shown to simplify the figures. It should be noted that all devices receive the necessary power, ground, and clock connections.

## Claims

1. Apparatus of the type for quantizing and analysing a video signal comprising first comparator means (84) for comparing the video signal to a threshold to produce a quantized video signal and slope detection means (6) including slope measuring means (16) for measuring the slope of the video signal against a positive and negative slope threshold and providing a first signal (NSLOPE) if the measured slope exceeds a negative slope threshold and a second signal (PSLOPE) if the measured slope exceeds a positive slope threshold, characterized in that, said video signal being received in a digitized form from an A/D converter (4), the apparatus comprises delay means (14) including a plurality of serially connected registers (32-48) each of which produces an output which is applied to the next register in line so that the outputs are shifted from one register for a clock period, to produce a plurality of delayed digitized signals, said first comparator means (84) are connected to one register output to receive one of said delayed digitized signals to produce said quantized video signal, said slope measuring means (16) are connected to two different of said register outputs for measuring the slope of said digitized video signal from said delayed digitized signals, and in that said apparatus further includes rise time detection means (22) for detecting a rise of the digitized video signal which exceeds a predetermined rise time value, said rise time detection means (22) comprising upper threshold generation means for producing an upper threshold, which include first adder means (94) for taking the difference between a first delayed digitized signal and a first predetermined value to produce said upper threshold, lower threshold generation means for producing a lower threshold, which include second adder means (90) for taking the difference between said first delayed digitized signal and a second predetermined value to produce said lower threshold, second comparator means (95) for comparing a second delayed digitized signal to said upper threshold, third comparator means (92) for comparing a third delayed digitized signal to said lower threshold and a logic circuit connected to the outputs of said second and third comparator means (92,95).

2. Apparatus according to claim 1 characterized by further comprising threshold selection means (78) for selecting between a predetermined threshold and a dynamic threshold used for producing said quantized video signal, said rise time detection means (22) producing a command signal transmitted to said threshold selection means (78) for disabling the selection of the dynamic threshold upon detection of a rise of the digitized video signal which exceeds a predetermined rise time value.

3. Apparatus according to claim 2, further comprising dynamic threshold generation means (18) for generating said dynamic threshold, said dynamic threshold generation means having sampling means (74) for storing a sample of one of said delayed digitized signals, and first arithmetic means (76) for taking a difference between said sample and a third predetermined value.

4. Apparatus according to any of the preceding claims, characterized in that said slope detection means (6) includes second arithmetic means (52) for taking the difference between a third and a fourth delayed digitized signal to produce a digitized slope signal and fourth comparator means (54) for comparing said digitized slope signal to a predetermined positive slope threshold, and fifth comparator means (56) for comparing said digitized slope signal to a predetermined negative slope threshold.

**Patentansprüche**

1. Vorrichtung von der Art zum Quantisieren und Analysieren eines Videosignales, mit ersten Komparatoreinrichtungen (84) zum Vergleichen des Videosignales mit einem Schwellwert zur Erzeugung eines quantisierten Videosignales, und mit einer Detektionseinrichtung (6) für die Neigung mit Neigungsmesseinrichtungen (16) zum Messen der Neigung des Videosignales gegenüber einem positiven und einem negativen Neigunggsschwellwert und zum Liefern eines ersten Signales (NSLOPE), falls die gemessene Neigung einen negativen Neigungsschwellwert übersteigt, und eines zweiten Signales (PSLOPE), falls die gemessene Neigung einen positiven Neigungsschwellwert übersteigt, dadurch gekennzeichnet, daß das Videosignal in digitalisierter Form von einem A/D-Wandler (4) erhalten wird, daß die Vorrichtung eine Verzögerungseinrichtung (14) mit einer Mehrzahl von in Serie geschalteten Registern (32-48) aufweist, von denen ein jedes ein Ausgangssignal erzeugt, welches an das nächste Register in der Leitung angelegt wird, so daß die Ausgangssignale während einer Taktperiode von einem Register verschoben werden, um eine Mehrzahl von verzögerten digitalisierten Signalen zu erzeugen, daß die ersten Komparatoreinrichtungen (84) zur Erzeugung des quantisierten Videosignales mit einem Registerausgange verbunden sind, um eines der verzögerten digitalisierten Signale zu erhalten, wobei die Neigungsmesseinrichtungen (16) zum Messen der Neigung des digitalisierten Videosignales aus den verzögerten digitalisierten Signalen mit zwei verschiedenen Registerausgängen verbunden sind, und daß die Vorrichtung ferner Detektionseinrichtungen (22) für die Anstiegszeit zum Feststellen eines Anstieges desjenigen digitalisierten Videosignales umfaßt, das einen vorbestimmten Anstiegszeitwert übersteigt, welche Detektionseinrichtungen (22) für die Anstiegszeit eine obere Schwellwertgeneratoreinrichtung zum Erzeugen eines oberen Schwellwertes aufweist, die eine erste Additionseinrichtung (94) zum Ziehen der Differenz zwischen einem ersten verzögerten digitalisierten Signal und einem ersten vorbestimmten Wert zur Erzeugung des oberen Schwellwertes sowie eine untere Schwellwertgeneratoreinrichtung zum Erzeugen eines unteren Schwellwertes aufweist, die eine zweite Additionseinrichtung (90) zum Ziehen der Differenz zwischen dem ersten verzögerten digitalisierten Signal und einem zweiten vorbestimmten Wert zur Erzeugung des unteren Schwellwertes umfaßt, zweite Komparatoreinrichtungen (95) zum Vergleichen eines zweiten verzögerten digitalisierten Signales mit dem oberen Schwellwert, dritte Komparatoreinrichtungen (92) zum Vergleichen eines dritten verzögerten digitalisierten Signales mit dem unteren Schwellwert, und einen logischen Kreis, der mit dem Ausgang der zweiten und dritten Komparatoreinrichtungen (92, 95) verbunden ist.

2. Vorrichtung nach Anspruch 1, dadurch gekennzeichnet, daß sie ferner eine Schwellwertwahleinrichtung (78) zum Auswählen zwischen einem vorbestimmten Schwellwert und einem dynamischen Schwellwert aufweist, der zum Erzeugen des quantisierten Videosignales verwendet wird, wobei die Detektionseinrichtung (22) für die Anstiegszeit ein Steuersignal erzeugt, das an die Schwellwertwahleinrichtung (78) zur Sperrung der Auswahl des dynamischen Schwellwertes bei Feststellung eines Anstieges des digitalisierten Videosignales übertragen wird, der einen vorbestimmten Anstiegszeitwert überschreitet.

3. Vorrichtung nach Anspruch 2, welche ferner eine dynamische Schwellwertgeneratoreinrichtung (18) zum Erzeugen des dynamischen Schwellwertes aufweist, wobei die dynamische Schwellwertgeneratoreinrichtung eine Abfrageeinrichtung (74) zum Speichern einer Probe eines der verzögerten digitalisierten Signale und eine erste arithmetische Einrichtung (76) zum Ziehen einer Differenz zwischen der Probe und einem dritten vorbestimmten Wert besitzt.

4. Vorrichtung nach einem der vorhergehenden Ansprüche, dadurch gekennzeichnet, daß die Detektionseinrichtung (6) für die Neigung eine zweite arithmetische Einrichtung (52) zum Ziehen der Differenz zwischen einem dritten und einem vierten verzögerten digitalisierten Signal zum Erzeugen eines digitalisierten Neigungssignales sowie vierte Komparatoreinrichtungen (54) zum Vergleichen des digitalisierten Neigungssignales mit einem vorbestimmten positiven Neigungsschwellwert und fünfte Komparatoreinrichtungen (56) zum Vergleichen des digitalisierten Neigungssignales mit einem vorbestimmten negativen Neigungsschwellwert aufweist.

## Revendications

1. Appareil du type destiné à quantifier et analyser un signal vidéo, comportant un premier moyen comparateur (84) pour comparer le signal vidéo à un seuil afin de générer un signal vidéo quantifié et des moyens de détection de pente (6) comprenant des moyens de mesure de pente (16) pour mesurer la pente du signal vidéo par rapport à des seuils de pente positive et de pente négative et générer un premier signal (NSLOPE) si la pente dépasse un seuil de pente négative et un second signal (PSLOPE) si la pente mesurée dépasse un seuil de pente positive, caractérisé en ce que, ledit signal vidéo étant reçu sous forme numérisé en provenance d'un convertisseur A/D (4), l'appareil comporte des moyens de retard (14), comprenant une pluralité de registres connectés en série (32 à 48) dont chacun génère un signal de sortie qui est appliqué au registre suivant dans la file afin de décaler les signaux de sortie d'un registre à chaque période d'horloge, pour générer une pluralité de signaux numérisés retardés, ledit moyen comparateur (84) est connecté à une sortie de registre pour recevoir l'un des dits signaux numérisés retardés afin de générer ledit signal vidéo quantifié, lesdits moyens de mesure de pente (16) sont connectés à deux sorties différentes parmi lesdites sorties de registres pour mesurer la pente dudit signal vidéo numérisé à partir desdits signaux numérisés retardés, et en ce que ledit appareil comporte en outre des moyens de détection de temps de montée (22) pour détecter un temps de montée du signal vidéo numérisé qui dépasse une valeur de temps de montée prédéterminée, lesdits moyens de détection de temps de montée (22) comportant des moyens de génération de seuil supérieur, pour générer une valeur de seuil supérieur, qui comportent un premier moyen additionneur (94) pour calculer la différence entre un premier signal numérisé retardé et une première valeur prédéterminée afin de générer ladite valeur de seuil supérieur, des moyens de génération de seuil inférieur, pour générer une valeur de seuil inférieur, qui comportent un second moyen additionneur (90) pour calculer la différence entre ledit premier signal numérisé retardé et une seconde valeur prédéterminée afin de générer ladite valeur de seuil inférieur, un deuxième moyen comparateur (95) pour comparer un deuxième signal numérisé retardé audit seuil supérieur, un troisième moyen comparateur (92) pour comparer un troisième signal numérisé retardé audit seuil inférieur et un circuit logique connecté aux sorties desdits deuxième et troisième moyens comparateur (92, 95).

2. Appareil selon la revendication 1, caractérisé en ce qu'il comporte en outre des moyens de sélection de seuil (78) pour choisir entre un seuil prédéterminé et un seuil dynamique servant à générer ledit signal vidéo quantifié, lesdits moyens de détection de temps de montée (22) générant un signal de commande transmis auxdits moyens de sélection de seuil (78) pour invalider la sélection du seuil dynamique sur détection d'une montée du signal vidéo numérisé excédant une valeur de temps de montée prédéterminée.

3. Appareil selon la revendication 2, comportant en outre des moyens de génération de seuil dynamique (18) pour générer ledit seuil dynamique, lesdits moyens de génération de seuil dynamique comportant des moyens d'échantillonnage (74) pour stocker un échantillon de l'un desdits signaux numérisés retardés, et des premiers moyens arithmétiques (76) pour calculer la différence entre ledit échantillon et une troisième valeur prédéterminée.

4. Appareil selon l'une quelconque des revendications précédentes, caractérisé en ce que ledit moyens de détection de pente (6) comprend des seconds moyens arithmétiques (52) pour calculer la différence entre un troisième et un quatrième signaux numérisés retardés afin de générer un signal de pente numérisé et un quatrième moyen comparateur (54) pour comparer ledit signal de

**EP 0 573 513 B1**

pente numérisé à un seuil de pente positive prédéterminé et un cinquième moyen comparateur (56) pour comparer ledit signal de pente numérisé à un seuil de pente négative prédéterminé.

FIG. 1

FIG. 2

FIG. 3

THRESHOLD INPUT

REG. ~60

10/13 dB

ADDER ~62

DIGDEL 0

COMPARATOR ~64

SHIFT REG. ~66

68

RESET

+5V    72

D
CK    Q
CLR

REG. ~74

6/9 dB

+ −

ADDER

76

MUX

78

DIGDEL 3

COMPARATOR ~84

QV

EP 0 573 513 B1

FIG. 4